# NEW EUROPEAN PATENT SPECIFICATION

(11) **EP 2 571 404 B2**
(45) Date of publication and mention of the opposition decision: **25.10.2017**
(45) Mention of the grant of the patent: 16.04.2014
(21) Application number: 11720518.7
(22) Date of filing: 20.05.2011
(51) Int. Cl.: A47J 31/36, A47J 31/44

(54) **ERGONOMIC HANDLE & USER-INTERFACE**
ERGONOMISCHER GRIFF UND BENUTZERSCHNITTSTELLE
POIGNÉE ERGONOMIQUE ET INTERFACE D'UTILISATEUR

(30) Priority: 21.05.2010 EP 10163649
(43) Date of publication of application: 27.03.2013
(73) Proprietor: Nestec S.A., 1800 Vevey (CH)
(72) Inventor: CAHEN, Antoine, 1005 Lausanne (CH); RITHENER, Blaise, 1814 La Tour-de-Peilz (CH); GRANGER, Eric, 1005 Lausanne (CH)
(74) Representative: Vossius & Partner Patentanwälte Rechtsanwälte mbB
(86) International application number: PCT/EP2011/058222
(87) International publication number: WO 2011/144719

(56) References cited:
- EP-A1- 1 878 368
- EP-A1- 1 992 263
- EP-A2- 1 440 640
- EP-A2- 1 440 640
- EP-B1- 0 730 425
- EP-B1- 1 912 542
- WO-A1-2005/060801
- WO-A1-2008/072295
- WO-A1-2009/074557
- WO-A1-2009/135034
- WO-A1-2010/032271
- WO-A1-2005//060801
- WO-A1-2008//072295
- WO-A1-2009//074557
- WO-A1-2009//135034
- WO-A1-2010//032271
- WO-A2-2009/074550
- Beleg über Verkauf und Lieferung des Modells 470
- Evidence-image 1
- Evidence-image 2
- Auszug aus dem Sortiment (Messekatalog) 2005/2006 der Turmix AG
- Heise Zeitschriften Verlag, Internet "www.heise.de" Modell Turmix TX100
- Heise Zeitschriften Verlag, Internet "www.heise.de" Modell Turmix TX150
- dooyoo GmbH, "Testbericht zu Nespresso Turmix TX100"
- Producto AG, "Testbericht zu Krups Nespresso Essenza XN"
- Target Up GmbH, "Testbericht zu Krups Nespresso Essenza XN2005"
- Amazon Internetauszug "www.amazon.de"
- Amazon Internetauszug "www.amazon.de"
- Amazon Internetauszug "www.amazon.de"
- Rechnung an Groupe SEB
- Wikipediaauszug zu Groupe SEB
- Auszug aus "Hand und Instrument", Breitkopf & Härtel, Wiesbaden 2005 ISBN 3765103764
- Bedienungsanleitung Turmix150
- Internationale Designregistrierung DM063413
- Konsumentenmagazin K-Geld 1/2007 "Teures Schäumchen"
- Bedienungsanleitung Delizio Comfort II
- Grundeldinger Zeitung, 24.06.2009
- L'EXPRESS, 23.07.2009
- IL CAFE, 16.08.2009
- Rechnung Delica Nr. 810050540
- Foto Maschinenbedienung Delizio Comfort II
- Bedienungsanleitung Delizio Compact Automatic Touch
- Migros-Magazin 17, 26.04.2010
- Migros-Magazin 18, 03.05.2010
- Abrufkontakt Migros Genossenschafts-Bund an die Delica AG für 1000 Kapselmaschinen Delizio Compact Touch
- Lagerbestellung Migros Genossenschafts-Bund an die Delica AG für 400 Kapselmaschinen Delizio Compact Touch
- Bestellung der Dipl. Ing. Fust AG an die Delica AG für 500 Kapselmaschinen Delizio Compat Touch
- Prospekt der Migros Handelskette "m electronics" Ausgabe 5/2010
- Bedienungsanleitung Cremesso Compact Automatic Touch
- Screenshot von Werbefilm "Cremesso Swiss Touch" auf Youtube
- Foto Maschinenbedienubg Cremesso Compact Touch
- Foto Bedienung des Modells 470

## Description

### Field of the Invention

The field of the invention pertains to machines for preparing beverages from a liquid circulating through a flavouring ingredient. In particular, the field pertains to the ergonomic handling of such machines by users in order to prepare a beverage.

For the purpose of the present description, a "beverage" is meant to include any liquid food, such as tea, coffee, hot or cold chocolate, milk, soup, baby food, etc... A "capsule" is meant to include any pre-portioned beverage ingredient within an enclosing packaging of any material, in particular an airtight packaging, e.g. plastic, aluminium, recyclable and/or biodegradable packagings, and of any shape and structure, including soft pods or rigid cartridges containing the ingredient.

### Background Art

Certain beverage preparation machines use capsules containing ingredients to be extracted or to be dissolved; for other machines, the ingredients are stored and dosed automatically in the machine or else are added at the time of preparation of the drink.

Most coffee machines possess filling means that include a pump for liquid, usually water, which pumps the liquid from a source of water that is cold or indeed heated through heating means, such as a heating resistor, a thermoblock or the like.

Such machine typically have a brewing unit for holding and extraction the beverage ingredient. To introduce the ingredient into the brewing unit and then remove the ingredient upon use, the brewing unit has a closure mechanism that may be driven by a handle that is operable by a user. Various configurations for manipulating the machine have been disclosed in the art.

EP 1 208 782 discloses a coffee machine having a main body including a brewing unit for extracting coffee capsules. The brewing unit is opened and closed with the aid of a handle that can be turned over the main body by an angle of about a 180 deg. from behind to the front of the main body. The handle has a pair of generally L-shaped levers connected at one end by a hand-drivable transverse rod and pivotally mounted at the opposite end to the opening and closing mechanism of the brewing unit. The pivotable L-shaped levers drive a movable part of the brewing unit via a pair of intermediate levers connected at a first end to this movable brewing unit part and at a second end to the corner of the L-shaped levers. US 2008/0006159 discloses a brewing unit that has a horizontally movable drawer for introducing an ingredient pouch and a vertically movable top part with a piercing mechanism for opening the pouch. These elements are driven by a generally U-shaped movable handle that can be pivoted from an upright open position down to a generally horizontal closed position. US 7,165,488, WO 2007/111884 and EP 1 829 469 disclose a beverage machine having a brewing unit that can be opened and closed manually by a handle system that is linked to a movable top part of the brewing unit and indirectly to a top front part of the main body.

More recently, efforts have been specifically devoted to the ease of operation of a beverage preparation machine for a user and ergonomic configuration of such machines, as illustrated in the following documents.

EP 1 878 368 discloses a beverage machine having a functional block that is rotatably mounted on a support base. The functional block can be designed to be removable from the support base. EP 1 864 598 discloses an autonomous beverage machine that can be mounted onto a docking station. The beverage machine is arranged to be operable whether connected to the docking station or disconnected therefrom. WO 2009/074553 and WO 2010/015427 disclose beverage preparation machines that are configured so that they can be lifted single-handed by a user.

For allowing the user to control machine operation various systems have been disclosed in the art, for instance as mentioned in the following references: AT 410 377, CH 682 798, DE 44 29 353, DE 202 00 419, DE 20 2006 019 039, DE 2007 008 590, EP 1 448 084, EP 1 676 509, EP 08155851.2, FR 2 624 844, GB 2 397 510, US 4,377,049, US 4,458,735, US 4,554,419, US 4,767,632, US 4,954,697, US 5,312,020, US 5,335,705, US 5,372,061, US 5,375,508, US 5, 731, 981, US 5,645,230, US 5, 836, 236, US 5,959,869, US 6, 182, 555, US 6, 354, 341, US 6, 759, 072, US 2007/0157820, WO 97/25634, WO99/50172, WO 2004/030435, WO 2004/030438, WO 2006/063645, WO 2006/090183, WO 2007/003062, WO 2007/003990, WO 2008/104751, WO 2008/138710, WO 2008/138820, WO 2009/135821 and WO 2010/003932.

DE 20 2006 019 039, AT 410 377, US 4,377,049, US 4,554,419, US 4,954,697, US 5,685,435, US 6, 759, 072, US 6, 182, 555, WO 2004/030438, WO 2006/090183, WO 2007/003990 WO 2008/138710 and WO 2010/003932 disclose beverage dispensing machines with a generally upright front face having a lower open cavity for receiving a receptacle to be filled via a beverage outlet in the cavity and, on an upper part of the front face, above the opening of this cavity, a generally vertical upper screen, touch screen and/or touch pad arranged as a user-interface. FR 2 624 844 discloses a beverage dispenser having a front face with an open cavity for filling a receptacle and a microcomputer with a keyboard and a monitor housed in the machine's front face next to the cavity opening.

More advanced user-interface systems may include user-movable laser pointers for setting a level of fill directly on a user-cup, as taught in WO 2006/063645, or a sensor for acquiring the position of a finger or a user-operated object pointing onto a desired level of fill on a cup, as disclosed in WO 2009/135821, and filling automatically the cup to such a level.

However, there is still a need to further improve the ergonomics of a coffee machine arranged so that its operation by a user is facilitate, in particular accelerated.

### Summary of the Invention

The invention thus relates to a machine for preparing a beverage as defined in the claims.
The machine includes:
- a beverage preparation module for holding a flavouring ingredient, in particular a pre-portioned ingredient such as an ingredient supplied to such module within a capsule, and circulating a liquid, e.g. water, therethrough to form such beverage;
- a handle movable between a transfer position for loading the flavouring ingredient into the module and/or evacuating this ingredient from the module, and a circulation position for circulating the liquid through this ingredient; and
- a user-interface for initiating circulation of this liquid through the flavouring ingredient in the beverage preparation module.

The handle has a drive portion arranged to be contacted and driven by a human hand to move the handle between the transfer position and the circulation position. The handle is movable from the transfer position to the circulation position.

For instance, the machine is a coffee, tea or soup machine. The machine may be arranged for preparing within a brewing unit a beverage by passing hot or cold water or another liquid through a capsule containing a flavouring ingredient of the beverage to be prepared, such as ground coffee or tea or chocolate or cacao or milk powder.

The brewing unit may be moved by the handle from a first configuration, namely a transfer configuration, in which the flavouring ingredient is introduced into the brewing unit and/or evacuated therefrom, and a second configuration, namely a circulation configuration, in which the liquid is circulated through the flavouring ingredient to prepare the beverage. The circulation and transfer configurations of the brewing unit typically correspond to the handle's circulation and transfer positions, respectively.

Typically, the machine includes one or more of a pump, heater, drip tray, ingredient collector, liquid tank and fluid connection system for providing a fluid connection between the liquid tank and the brewing unit, etc... The configuration of a fluid circuit between a source of liquid, e.g. a reservoir, and a brewing unit, i.e. a suitable beverage preparation module, is for example disclosed in greater details in WO 2009/074550.

In accordance with the invention, the handle and the user-interface are arranged so that the user-interface is operable by the user's hand while this hand is still in contact with the drive portion of the handle upon driving the handle into the circulation position.

It follows that a user operating the machine by moving the handle into a circulation position for circulating the liquid through the flavouring ingredient brings at the same time his or her hand to the interface for initiating the circulation of the liquid through the ingredient. In other words, the user does not have to displace his or her hand to a different location on the machine or use another hand to start the beverage making process after the flavouring ingredient has been properly positioned in the beverage preparation module by bringing the handle into the circulation position. Hence, the manual operation of the machine is simplified and accelerated by minimising the user's manipulation effort.

The drive portion can be arranged to be pushed and/or pulled by a human hand for driving the handle, the user-interface being operable by the human hand while the hand is still in a pushing and/or pulling position against the drive portion of the handle upon driving the handle into the circulation position. The handle may be pushed by the user's fingertips and/or pulled by gripping the handle.

The drive portion can be arranged to be seized by the human hand for driving the handle, the user-interface being operable by the human hand while the hand is still seizing the drive portion of the handle upon driving the handle into the circulation position.

Hence, the handle and the interface may be so configured that the user can operate the interface with the hand used for bringing the handle into the circulation position without having to move the hand away from the handle.

Advantageously, the drive portion forms a part of least counter-force of the handle against the human hand while driving the handle. Hence, in this configuration, the user will drive the handle to the circulation position by actuating the drive portion of the handle that generates least mechanical resistance during the movement.

The user-interface may include at least one user-selector selected from push-buttons, turn-buttons, toggle-switches, slide buttons, touch-buttons, touch pads and touch screens. The user-interface may comprise a plurality of selectors for selecting different drinks, in particular drinks of different sizes and/or different types, such as espresso, regular coffee and/or lungos, extra-long coffee and milk coffee.

The user-interface may be fixed to the machine's housing and the handle movable relative thereto, in particular pivotable relative to the housing.

The handle is pivotally movable, in particular pivotally movable over a top part of the machine. The handle can be generally U-shaped, the drive portion forming in particular a middle part of the generally U-shaped handle. The handle can have a pair of levers and the drive portion between the levers, in particular a pair of levers having first end portions that are pivotally mounted and second end portions that are joined via the drive portion. The handle may be a single-arm lever, in particular a lever having a first end portion that is pivotally mounted and a second end portion that forms the drive portion.

According to the invention, the machine has a front face bearing an outlet for delivering said beverage, the user-interface being located on said front face.

The user-interface may extend below the drive portion when the handle is in the circulation position, the user-interface being optionally located in front of the handle. The user-interface may extend above and/or behind the drive portion when the handle is in the circulation position.

When the handle is in the circulation position, the user-interface can be spaced from the drive portion by a distance in the range of 0 to 10 cm, in particular in the range of 0.5 to 7 cm such as 1 to 5 cm, optionally 1.5 to 3 cm.

The beverage preparation machine may have a passage for introducing by gravity the flavouring ingredient, in particular within a capsule, into the beverage preparation module, the drive portion being located generally above and/or adjacent the passage when the handle is in the transfer position. Hence, the handle in its transfer position is located closely to the user's hand that inserts the ingredient into the machine's passage so that minimal movement of the hand is required from the insertion of the ingredient to manually actuating the handle.

### Brief Description of the Drawings

The invention will now be described with reference to the schematic drawings, wherein:
- Figures 1 and 2 illustrate an example of a beverage machine which does not fall under the wording of the claims but is helpful for the understanding of the invention.
- Figures 3 to 5 illustrate part of an embodiment of a beverage machine according to the invention.

### Detailed description

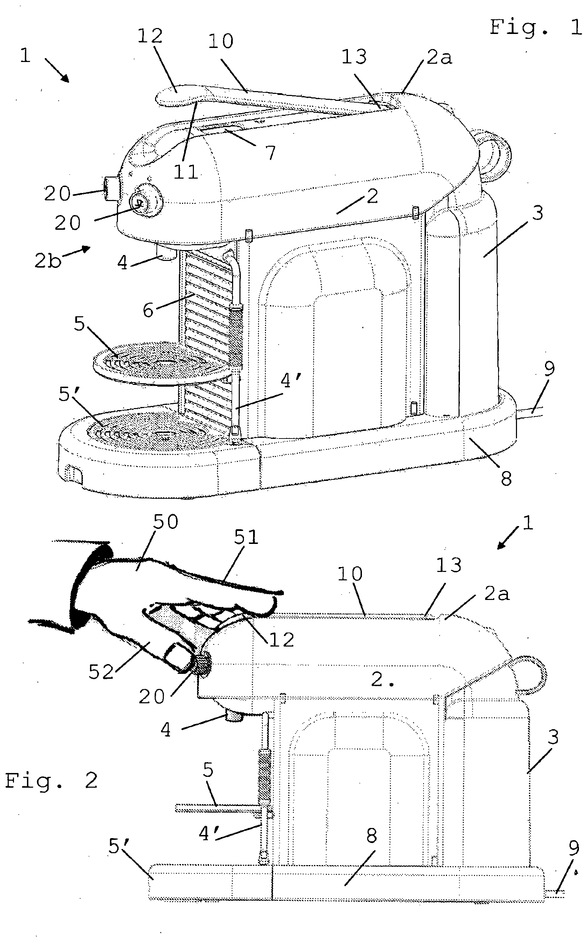

Figures 1 and 2 illustrate an example of a beverage preparation machine 1.

Machine 1 can be electrically powered, typically by the mains, via an electric cord 9.

Machine 1 has an internal beverage preparation module covered by a housing 2. The beverage preparation module is arranged for holding a flavouring ingredient, in particular a pre-portioned ingredient such as an ingredient supplied to such module within a capsule, and circulating a liquid therethrough to form the beverage.

The liquid, e.g. water, may be stored and supplied to the beverage preparation module from a tank 3. The beverage, upon formation, can be dispensed via an outlet 4 to a dispensing area 5,5', e.g. a support for holding a user cup or mug. The dispensing area may include a first cup support 5 that is movable away from under outlet 4 so as to give access to a lower second cup support 5' for larger cups, e.g. for dispensing lungos or extra-large beverages. The lower cup support 5' may be connected to a base 8 of machine 1. Suitable movable cup supports are for example disclosed in EP 1867260 and in WO 2009/074557, the contents of which are hereby incorporated by way of reference.

Machine 1 also includes a steam and/or hot water generator connected to an outlet 4', e.g. for the preparation of frothed milk and/or tea.

Adjacent to the beverage preparation module, machine 1 may have a collector 6 for used flavouring ingredient, e.g. ground coffee or tea upon brewing, for instance contained within capsules. Collector 6 may be positioned underneath the beverage preparation module to collect upon beverage preparation the used flavouring ingredient evacuated to collector 6, e.g. by gravity. Suitable collectors are for example disclosed in WO 2009/074559 and in WO 2009/135869, which are hereby incorporated by way of reference.

Machine 1 has a handle 10 movable between: a transfer position for loading the ingredient, e.g. within a capsule, into the module and/or evacuating such ingredient from the module; and a circulation position for circulating the liquid through the ingredient.

Typically, handle 10 actuates an ingredient holder with an ingredient chamber, such as a brewing unit, of the beverage preparation module from: a transfer position for insertion of the flavouring ingredient into the holder and/or evacuation of this ingredient therefrom; and a circulation position for circulating the liquid through this ingredient in the ingredient holder to form the beverage. Typically, the ingredient holder, e.g. a brewing unit, has two relatively movable parts that are moved apart for opening the ingredient holder into the transfer position and moved together for closing the ingredient holder into the circulation position. In the circulation position, the ingredient holder may tightly enclose the flavouring ingredient to ensure proper guidance of the liquid through the ingredient.

The circulation position is illustrated in Fig. 2, in which handle 10 is resting on or in a top face 2a of machine 1. In particular handle 10 can be flush with housing 2.

As shown in Figs 1 and 2, handle 10 is a single-arm lever generally shaped as a straight bar that is slightly curved or bent at its extremity 11 for ergonomic reasons, namely for facilitating the manual application of force onto handle 10 by a convenient orientation of contact surface 12 for hand 50 when handle 10 is moved from the transfer position to the circulation position. In the circulation position (Fig. 2), handle 10 with its extremity 11 may be flush with housing 2 that has a corresponding shape, e.g. to facilitate cleaning of the surface of housing 2.

Hence, handle 10 has a drive portion 12 arranged to be contacted and driven by a human hand 50 to move the handle between the transfer position in which the flavouring ingredient, e.g. enclosed in a capsule, is inserted into the beverage preparation module for instance via a passage 7, and the circulation position in which the flavouring ingredient is housed in the beverage preparation module and liquid may be circulated therethrough to form the beverage.

Fig. 1 shows handle 10 in an intermediate position between the transfer position and the circulation position (Fig. 2). In the transfer position, handle 10 entirely uncovers passage 7 for allowing the insertion of the flavouring ingredient, e.g. within a capsule, into the beverage preparation module.

Passage 7 can be arranged for introduction by gravity of the flavouring ingredient into the beverage preparation module, drive portion 12 being located generally above and/or adjacent passage 7 when handle 10 is in the transfer position to facilitate the coordination between manual introduction of a flavouring ingredient, e.g. within a capsule, into passage 7 and manually actuating handle 10, in particular using the same hand 50.

Furthermore, machine 1 includes a user-interface 20 for initiating circulation of the liquid through the flavouring ingredient in the beverage preparation module.

The beverage preparation module typically includes one or more of the following components:
a) the ingredient holder, such as a brewing unit, for receiving the flavouring ingredient of this beverage, in particular a pre-portioned ingredient supplied within a capsule, and for guiding an incoming flow of liquid, such as water, through this ingredient to beverage outlet 4;
b) an in-line heater, such as a thermoblock, for heating this flow of liquid to be supplied to the ingredient holder;
c) a pump for pumping this liquid through the in-line heater;
d) one or more fluid connecting members for guiding this liquid from a source of liquid, such as tank 3 of liquid, to beverage outlet 4;
e) an electric control unit, in particular comprising a printed circuit board (PCB), for receiving instructions from a user via an interface and for controlling the in-line heater and the pump; and
f) one or more electric sensors for sensing at least one operational characteristic selected from characteristics of the ingredient holder, the in-line heater, the pump, liquid reservoir 3, ingredient collector 6, a flow of this liquid, a pressure of this liquid and a temperature of this liquid, and for communicating such characteristic(s) to the control unit.

The heater may be a thermoblock or an on demand heater (ODH), for instance an ODH type disclosed in EP 1 253 844, EP 1 380 243 and EP 1 809 151. Examples of suitable brewing units and capsule management are for example disclosed in WO 2005/004683, WO2007/135136 and WO 2009/043630, which are hereby incorporated by way of reference. Suitable beverage preparation modules are for instance disclosed in WO 2009/074550 and WO 2009/130099 which are hereby incorporated by way of reference.

In accordance with the invention, handle 10 and user-interface 20 are arranged so that user-interface 20 is operable by a human hand 50 while it is still in contact with drive portion 12 of handle 10 upon driving handle 10 into the circulation position, as illustrated in Fig. 2.

For instance, drive portion 12 is contacted and actuatable by one or more of the index finger, middle finger, ring finger and little finger 51, user-interface 20 being operable by the hand's thumb 52 while finger(s) 51 is/are still in contact with handle 10, i.e. without having to move hand 50 away from handle 10 after moving handle 10 into its circulation position. For convenience, drive portion 12 may have a surface or profile specially adapted for being hand driven, e.g. the surface of drive portion 12 may include a means, such as a surface structure or composition, in particular an anti-skid surface that provides friction against hand 50.

As illustrated in Fig. 2, drive portion 12 is arranged to be pushed by human hand 50 for driving handle 10. User-interface 20 is operable by hand 50 while it is still in a pushing position against drive portion 12 upon driving handle 10 into the circulation position (Fig. 2). User-interface 20 may include a plurality of user selectors for initiating preparation of beverages of different flavours and/or of different sizes and/or different types. For instance, user-interface 20 includes a first user-selector and a second user-selector, e.g. in the form of push-buttons, for selecting the dispensing of espresso coffee and of lungo coffee.

Machine 1 illustrated in Figs 1 and 2 has a front face 2b bearing outlet 4 for delivering the beverage, user-interface 20 being located on front face 2b. In particular, user interface 20 is located below drive portion 12 to be easily accessible by the user's hand 50 while still in position on drive portion 12 on handle 10 upon reaching the handle's circulation position (Fig. 2). For instance, when handle 10 is in the circulation position, user-interface 20 is spaced from drive portion 12 by a distance in the range of 2 to 4 cm.

Drive portion 12 may form a part of least counter-force of handle 10 against human hand 50 while driving handle 10. For instance, handle 10 is arranged to pivot at a first end portion 13 thereof and drive portion 12 is located at the opposite end of handle 10 so that the lever arm is maximised and the force applied by hand 50 and necessary to vanquish the counter-force of the system minimised.

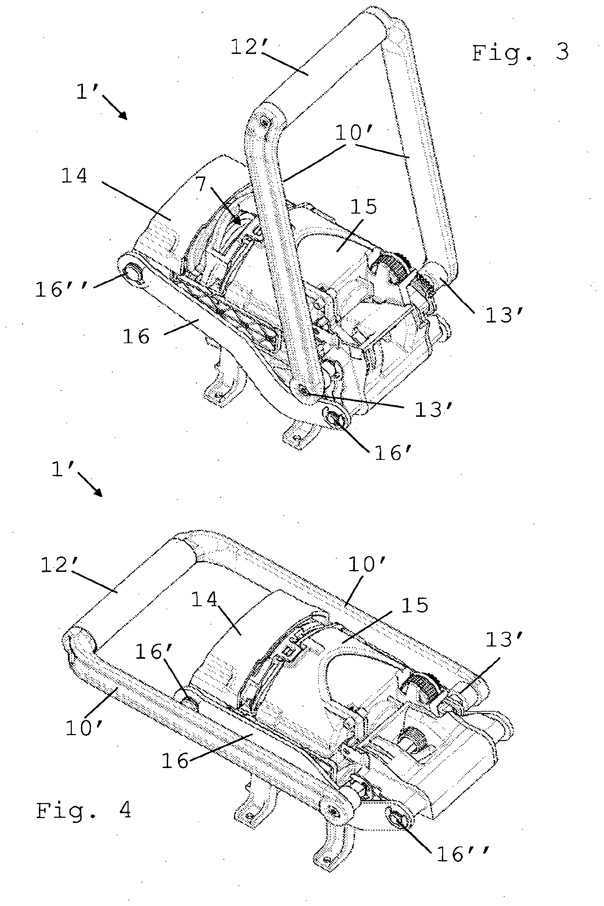

Figs 3 to 5, in which the same numeric references generally designate the same elements, illustrate a part of another embodiment of a machine 1 according to the invention. Figs 3 and 4 illustrate a brewing unit 1' that is part of a beverage preparation module (not further shown) and connected to a handle 10',12'.

Brewing unit 1' has a front part 14 and a rear part 15. Front and rear parts 14,15 can be moved apart (Fig. 3) to form between them passage 7 for the insertion of a capsule and may be moved together (Fig. 4) around the inserted capsule for closing passage 7, for forming a brewing chamber around the capsule and for circulating liquid, e.g. water, through the chamber and the capsule therein to form a beverage.

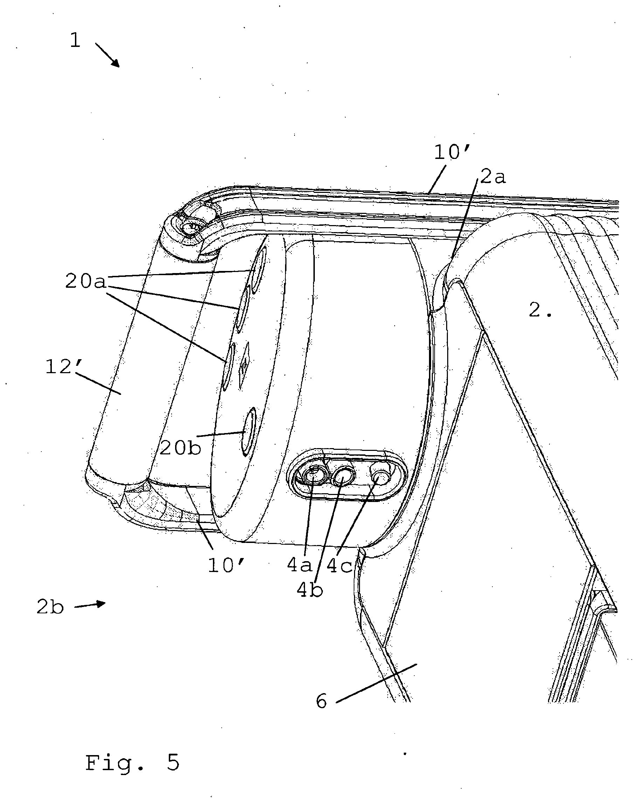

Handle 10',12' is movable between a transfer position (Fig. 3) in which parts 14,15 are spaced apart to form passage 7 and a circulation position (Figs 4 and 5) in which parts 14,15 are urged together around a capsule for circulating liquid through the capsule. The handle has a drive portion 12' arranged to be contacted and driven by a human hand. Drive portion 12' can be transverse and extend between a pair of levers 10' forming therewith generally a u-shape. Hence, drive portion 12' forms a middle part of handle 10',12'. Levers 10' are pivotally mounted opposite drive portion 12' about a pivot axis 13' in rear part 15 of brewing unit 1'. Lever 10' extends beyond pivot axis 13' and is connected to an extremity of a traction arm 16 via a pivot joint 16'. An opposite extremity of traction arm 16 is connected via a second pivot joint 16" to front part 14 of brewing unit 1'.

Hence, moving handle 10',12' from the transfer position (Fig. 3) to the circulation position (Fig. 4) causes front part 14 to be pulled against rear part 15 via traction arm 16. The relative movement of parts 14,15 may be further assisted by a hydraulic system (not shown), in particular for tightly closing the brewing unit.

Like in the previous embodiment, drive portion 12' forms a part of least counter-force of handle 10' , 12' against hand 50 while driving the handle.

As mentioned above, for convenience, drive portion 12 may have a surface or profile specially adapted for being hand driven, e.g. the surface of drive portion 12 may include a means, such as a surface structure or composition, in particular an anti-skid surface that provides friction against a human hand.

Further details of a brewing unit 1' and extraction module of this kind are disclosed in greater details in co-pending application EP 09172187.8 and EP 09177592.4 which are hereby incorporated by way of reference. Examples of handling of a capsule in such a brewing unit via an insertion passage for a flavouring ingredient are disclosed in WO 2007/135135.

Fig. 5 illustrates a part of machine 1 with its housing 2 and handle 10',12' in the circulation position.

Machine 1 has a user-interface 20a,20b for initiating circulation of liquid through the ingredient in the beverage preparation module.

In accordance with the invention, handle 10',12' and user-interface 20a,20b are arranged so that this user-interface is operable by human hand 50 while the hand is still in contact with drive portion 12' of the handle upon driving handle 10', 12' into its circulation position.

Drive portion 12 is arranged to be pushed, pulled and/or seized by a human hand for driving handle 10',12'. User-interface 20a,20b can be operated by such a hand while the hand is still in a pushing, pulling and/or seizure position against drive portion 12' of the handle upon driving the handle into the circulation position (Figs 4 and 5).

As illustrated in Figs 3 to 5, handle 10',12' is pivotally movable over a top part of machine 1. Moreover, machine 1 has a front face 2b bearing outlets 4a,4b,4c for delivering the beverage into a user-cup or user-mug (not shown) located therebelow.

As illustrated in Fig. 5, user-interface 20a,20b is located on front face 2b. User-interface 20a,20b may extend behind, above and below drive portion 12' when handle 10',12' is in the circulation position. User-interface 20a,20b includes four user-selectors, namely three upper push or touch buttons 20a and one lower touch button 20b. The various buttons may trigger the dispensing of beverages differing in size and/or flavour.

For instance, the upper three buttons 20a are arranged for selection of three different dispensing volumes, e.g. espresso coffee, lungo coffee or American coffee, and the lower button 20b may be arranged for selecting optional milk addition into the selected coffee. For example, machine 1 is arranged to dispense coffee via outlet 4a, hot water via outlet 4b for mixing with coffee to prepare Americano coffee, and milk via outlet 4c for incorporation into any coffee or for dispensing as such into a cup or mug. A fluid circuit suitable for preparing Americano coffee or extra-long coffee is disclosed in EP 10152556.6 which is hereby incorporated by way of reference.

In a variation, the upper three buttons 20a are configured for selecting the size of a beverage to be prepared and initiating beverage preparation. The lower button 20b may serve a different purpose. For instance, the lower button is a master switch or a service switch.

When handle 10', 12' is in the circulation position, user-interface 20a,20b may be spaced from drive portion 12' by a distance in the range of 1 to 10 cm. This distance depends on the length of arms 10' and the distance between pivoting points 13' and user-interface 20a,20b.

Hence, in the transfer position of handle 10',12' (Fig. 3), a user may introduce with his/her hand 50 a flavouring ingredient capsule (not shown) into passage 7 down and along which the capsule is guided by gravity inbetween parts 14,15, and then use the same hand 50 to seize the adjacent drive portion 12' of the handle. By pulling down drive portion 12' over the top and front faces 2a,2b of machine 1, handle 10',12' and brewing unit 1' with the introduced capsule are brought from the transfer position into the circulation position (Figs 4 and 5) in which the capsule is enclosed and secured ready for the circulation of liquid therethrough.

By driving handle 10',12' with hand 50 into the circulation position, drive portion 12' with actuating hand 50 is brought in front' of user-interface 20a,20b. With his or her hand 50 still on drive portion 12' a user may then operate user-interface 20a,20b, e.g. gripping handle 10',12' with fingers 51 and operating lower button 20b with thumb 52 or holding drive portion 12' with the palm of hand 50 and operating upper buttons 20a with fingers 51. Hence, the user does not have to move hand 50 away from drive portion 12' or involve his/her second hand to initiate beverage dispensing via outlets 4a,4b,4c. Thus user-movements for dispensing a beverage are reduced.

The beverage machine of the invention is particularly simple and is configured, in a simple manner, to be easily and safely operated single-handed by a user with few movements.

## Claims

1. A machine (1) for preparing a beverage having:
- a top part (2a);
- a front face (2b) bearing an outlet (4,4a,4b,4c) for delivering said beverage
- a beverage preparation module (1') for holding a flavouring ingredient, in particular a pre-portioned ingredient such as an ingredient supplied to such module within a capsule, and circulating a liquid therethrough to form said beverage;
- a handle (10,12,10',12') pivotally movable over the top part (2a) between a transfer position for loading said ingredient into the module and/or evacuating said ingredient from the module, and a circulation position for circulating said liquid through said ingredient; and
- a user-interface (20,20a,20b) for initiating circulation of said liquid through said ingredient in the beverage preparation module,
the handle having a drive portion (12,12') arranged to be contacted and driven by a human hand (50) to move the handle between the transfer position and the circulation position,
wherein the user interface (20,20a,20b) is located on the front face (2b) and wherein the handle (10,12,10',12') and the user-interface (20,20a,20b) are arranged so that said user-interface is operable by said human hand (50) while said hand is still in contact with the drive portion (12,12') of the handle upon driving the handle into the circulation position,
wherein the handle (10',12') has a pair of levers (10') and the drive portion (12') therebetween, the pair of levers having first end portions (13') that are pivotally mounted and second end portions that are joined via the drive portion (12'),
wherein the drive portion (12') forms a part of least counter-force of the handle (10',12') against said human hand (50) while driving the handle,
wherein the handle (10',12') is generally U-shaped, and
wherein the drive portion (12') forms a middle part of the generally U-shaped handle.

2. A machine (1) for preparing a beverage having:
- a top part (2a);
- a front face (2b) bearing an outlet (4,4a,4b,4c) for delivering said beverage
- a beverage preparation module (1') for holding a flavouring ingredient, in particular a pre-portioned ingredient such as an ingredient supplied to such module within a capsule, and circulating a liquid therethrough to form said beverage;
- a handle (10,12,10',12') pivotally movable over the top part (2a) between a transfer position for loading said ingredient into the module and/or evacuating said ingredient from the module, and a circulation position for circulating said liquid through said ingredient; and
- a user-interface (20,20a,20b) for initiating circulation of said liquid through said ingredient in the beverage preparation module,
the handle having a drive portion (12,12') arranged to be contacted and driven by a human hand (50) to move the handle between the transfer position and the circulation position,
wherein the user interface (20,20a,20b) is located on the front face (2b) and wherein the handle (10,12,10',12') and the user-interface (20,20a,20b) are arranged so that said user-interface is operable by said human hand (50) while said hand is still in contact with the drive portion (12,12') of the handle upon driving the handle into the circulation position,
***characterised in that***
the user-interface (20a,20b) extends above the drive portion (12') when the handle (10',12') is in the circulation position.

3. The machine of claim 1 or 2, wherein the drive portion (12,12') of the handle (10,12,10',12') is arranged to be pushed and/or pulled by said human hand (50) for driving the handle, the user-interface (20,20a,20b) being operable by said human hand while said hand is still in a pushing and/or pulling position against the drive portion upon driving the handle into the circulation position.

4. The machine of claim 1, 2 or 3, wherein the drive portion (12') of the handle (10,12,10',12') is arranged to be seized by said human hand (50) for driving the handle, the user-interface (20a,20b) being operable by said human hand while said hand is still seizing the drive portion (12') upon driving the handle into the circulation position.

5. The machine of any preceding claim when dependent on claim 2, wherein the drive portion (12,12') forms a part of least counter-force of the handle (10,12,10',12') against said human hand (50) while driving the handle.

6. The machine of any preceding claim, wherein the user-interface (20,20a,20b) includes at least one user-selector selected from push-buttons, turn-buttons, toggle-switches, slide buttons, touch-buttons, touch pads and touch screens.

7. The machine of claim 6, wherein the user-interface (20,20a,20b) comprise a plurality of selectors for selecting different drinks, in particular drinks of different sizes and/or different types.

8. The machine of any preceding claim when dependent on claim 2, wherein the handle (10',12') is generally U-shaped.

9. The machine of claim 8, wherein the drive portion (12') forms a middle part of the generally U-shaped handle.

10. The machine of claim 2 or of any of claims 3 to 9 when dependent on claim 2, wherein the handle (10',12') has a pair of levers (10') and the drive portion (12') therebetween, in particular a pair of levers having first end portions (13') that are pivotally mounted and second end portions that are joined via the drive portion (12').

11. The machine of claim 2 or of any one of claims 3 to 7 when dependent on claim 2, wherein the handle (10,12) is a single-arm lever.

12. The machine of claim 11, wherein the lever has a first end portion (13) that is pivotally mounted and another end portion that forms said drive portion (12).

13. The machine of any preceding claim, wherein the user-interface (20,20b) extends below the drive portion when the handle (10,12,10',12') is in the circulation position, the user-interface (20) being optionally located in front of the handle (10,12).

14. The machine of claim 1 or of any of claims 1 to 9 or 13 when dependent on claim 1, wherein the user-interface (20a,20b) extends above and/or behind the drive portion (12') when the handle (10',12') is in the circulation position.

15. The machine of claim 2 or of any of claims 3 to 13 when dependent on claim 2, wherein the user-interface (20a,20b) extends behind the drive portion (12') when the handle (10',12') is in the circulation position.

16. The machine of any preceding claim, wherein, when the handle (10,12,10',12') is in the circulation position, the user-interface (20,20a,20b) is spaced from the drive portion (12,12') by a distance in the range of 0 to 10 cm, in particular in the range of 0.5 to 7 cm such as 1 to 5 cm, optionally 1.5 to 3 cm.

17. The machine of any preceding claim, which has a passage (7) for introducing by gravity said flavouring ingredient into the beverage preparation module, the drive portion (12,12') being located generally above and/or adjacent the passage when the handle (10,12,10',12') is in the transfer position.

## Patentansprüche

1. Maschine (1) zur Zubereitung eines Getränks, aufweisend:
- einen oberen Teil (2a);
- eine Vorderseite (2b), die mit einem Auslass (4, 4a, 4b, 4c) zum Abgeben des Getränks versehen ist
- ein Getränkezubereitungsmodul (1') zum Aufnehmen eines aromatisierenden Inhaltsstoffs, insbesondere eines vorportionierten Inhaltsstoffs wie zum Beispiel eines Inhaltsstoffs, der einem derartigen Modul in einer Kapsel zugeführt wird, und Umwälzen einer Flüssigkeit durch dieses, um das Getränk zu bilden;
- einen Griff (10, 12, 10', 12'), der über den oberen Teil (2a) zwischen einer Übergabeposition zum Einbringen des Inhaltsstoffs in das Modul und/oder zum Entleeren des Inhaltsstoffs aus dem Modul und einer Umwälzposition zum Umwälzen der Flüssigkeit durch den Inhaltsstoff schwenkbar ist; und
- eine Benutzerschnittstelle (20, 20a, 20b) zum Auslösen der Umwälzung der Flüssigkeit durch den Inhaltsstoff im Getränkezubereitungsmodul,
wobei der Griff einen Antriebsabschnitt (12, 12') aufweist, der so angebracht ist, dass er von einer menschlichen Hand (50) berührt und angetrieben wird, um den Griff zwischen der Übergabeposition und der Umwälzposition zu bewegen,
wobei die Benutzerschnittstelle (20, 20a, 20b) an der Vorderseite (2b) angeordnet ist und wobei der Griff (10, 12, 10', 12') und die Benutzerschnittstelle (20, 20a, 20b) so angeordnet sind, dass die Benutzerschnittstelle von der menschlichen Hand (50) betrieben werden kann, während sich die Hand nach dem Treiben des Griffs in die Umwälzposition noch immer in Kontakt mit dem Antriebsabschnitt (12, 12') des Griffs befindet,
wobei der Griff (10', 12') ein Paar Hebel (10') aufweist und der Antriebsabschnitt (12') dazwischen liegt, wobei das Paar Hebel erste Endabschnitte (13') aufweist, die schwenkbar montiert sind, und zweite Endabschnitte, die über den Antriebsabschnitt (12') verbunden sind,
wobei der Antriebsabschnitt (12') einen Teil der geringsten Gegenkraft des Griffs (10', 12') gegen die menschliche Hand (50) beim Treiben des Griffs bildet,
wobei der Griff (10', 12') im Allgemeinen U-förmig ist, und
wobei der Antriebsabschnitt (12') einen mittleren Teil des im Allgemeinen U-förmigen Griffs bildet.

2. Maschine (1) zur Zubereitung eines Getränks, aufweisend:
- einen oberen Teil (2a);
- eine Vorderseite (2b), die mit einem Auslass (4, 4a, 4b, 4c) zum Abgeben des Getränks versehen ist
- ein Getränkezubereitungsmodul (1') zum Aufnehmen eines aromatisierenden Inhaltsstoffs, insbesondere eines vorportionierten Inhaltsstoffs wie zum Beispiel eines Inhaltsstoffs, der einem derartigen Modul in einer Kapsel zugeführt wird, und Umwälzen einer Flüssigkeit durch dieses, um das Getränk zu bilden;
- einen Griff (10, 12, 10', 12'), der über den oberen Teil (2a) zwischen einer Übergabeposition zum Einbringen des Inhaltsstoffs in das Modul und/oder zum Entleeren des Inhaltsstoffs aus dem Modul und einer Umwälzposition zum Umwälzen der Flüssigkeit durch den Inhaltsstoff schwenkbar ist; und
- eine Benutzerschnittstelle (20, 20a, 20b) zum Auslösen der Umwälzung der Flüssigkeit durch den Inhaltsstoff im Getränkezubereitungsmodul,
wobei der Griff einen Antriebsabschnitt (12,12') aufweist, der so angebracht ist, dass er von einer menschlichen Hand (50) berührt und angetrieben wird, um den Griff zwischen der Übergabeposition und der Umwälzposition zu bewegen,
wobei die Benutzerschnittstelle (20, 20a, 20b) an der Vorderseite (2b) angeordnet ist und wobei der Griff (10, 12, 10', 12') und die Benutzerschnittstelle (20, 20a, 20b) so angeordnet sind, dass die Benutzerschnittstelle von der menschlichen Hand (50) betrieben werden kann, während sich die Hand nach dem Treiben des Griffs in die Umwälzposition noch immer in Kontakt mit dem Antriebsabschnitt (12, 12') des Griffs befindet,
***dadurch gekennzeichnet, dass***
sich die Benutzerschnittstelle (20a, 20b) über den Antriebsabschnitt (12') erstreckt, wenn sich der Griff (10', 12') in der Umwälzposition befindet.

3. Maschine nach Anspruch 1 oder 2, wobei der Antriebsabschnitt (12,12') des Griffs (10,12,10', 12') so angeordnet ist, dass er von der menschlichen Hand (50) gedrückt und/oder gezogen werden kann, um den Griff anzutreiben, wobei die Benutzerschnittstelle (20, 20a, 20b) von der menschlichen Hand bedient werden kann, während sich die Hand nach dem Treiben des Griffs in die Umwälzposition noch in einer Druck- und/oder Zugposition gegen den Antriebsabschnitt befindet.

4. Maschine nach Anspruch 1, 2 oder 3, wobei der Antriebsabschnitt (12') des Griffs (10, 12, 10', 12') so angeordnet ist, dass er von der menschlichen Hand (50) gegriffen werden kann, um den Griff anzutreiben, wobei die Benutzerschnittstelle (20a, 20b) von der menschlichen Hand bedient werden kann, während die Hand nach dem Treiben des Griffs in die Umwälzposition noch den Antriebsabschnitt (12') greift.

5. Maschine nach einem der vorstehenden Ansprüche bei Abhängigkeit von Anspruch 2, wobei der Antriebsabschnitt (12,12') einen Teil mit der geringsten Gegenkraft des Griffs (10,12,10', 12') gegen die menschliche Hand (50) beim Treiben des Griffs bildet.

6. Maschine nach einem der vorstehenden Ansprüche, wobei die Benutzerschnittstelle (20, 20a, 20b) mindestens ein Benutzerauswahlelement beinhaltet, das ausgewählt ist aus Drucktasten, Drehknöpfen, Kippschaltern, Schiebern, Drucktastern, Touchpads und Touchscreens.

7. Maschine nach Anspruch 6, wobei die Benutzerschnittstelle (20, 20a, 20b) eine Vielzahl von Auswahlelementen für die Auswahl verschiedener Getränke umfasst, insbesondere Getränke unterschiedlicher Größen und/oder unterschiedlicher Arten.

8. Maschine nach einem der vorstehenden Ansprüche bei Abhängigkeit von Anspruch 2, wobei der Griff (10', 12') im Allgemeinen U-förmig ist.

9. Maschine nach Anspruch 8, wobei der Antriebsabschnitt (12') einen mittleren Teil des im Allgemeinen U-förmigen Griffs bildet.

10. Maschine nach Anspruch 2 oder nach einem der Ansprüche 3 bis 9 bei Abhängigkeit von Anspruch 2, wobei der Griff (10', 12') ein Paar Hebel (10') aufweist und der Antriebsabschnitt (12') zwischen diesen liegt, insbesondere ein Paar Hebel, das erste Endabschnitte (13') aufweist, die schwenkbar montiert sind, und zweite Endabschnitte, die über den Antriebsabschnitt (12') verbunden sind.

11. Maschine nach Anspruch 2 oder nach einem der Ansprüche 3 bis 7 bei Abhängigkeit von Anspruch 2, wobei der Griff (10, 12) ein einarmiger Hebel ist.

12. Maschine nach Anspruch 11, wobei der Hebel einen ersten Endabschnitt (13) aufweist, der schwenkbar montiert ist, und einen weiteren Endabschnitt, der den Antriebsabschnitt (12) bildet.

13. Maschine nach einem der vorstehenden Ansprüche, wobei die Benutzerschnittstelle (20, 20b) sich unter den Antriebsabschnitt erstreckt, wenn sich der Griff (10, 12, 10', 12') in der Umwälzposition befindet, wobei die Benutzerschnittstelle (20) optional vor dem Griff (10, 12) angeordnet ist.

14. Maschine nach Anspruch 1 oder nach einem der Ansprüche 1 bis 9 oder 13 bei Abhängigkeit von Anspruch 1, wobei sich die Benutzerschnittstelle (20a, 20b) über und/oder hinter den Antriebsabschnitt (12') erstreckt, wenn sich der Griff (10', 12') in der Umwälzposition befindet.

15. Maschine nach Anspruch 2 oder nach einem der Ansprüche 3 bis 13 bei Abhängigkeit von Anspruch 2, wobei sich die Benutzerschnittstelle (20a, 20b) hinter den Antriebsabschnitt (12') erstreckt, wenn sich der Griff (10', 12') in der Umwälzposition befindet.

16. Maschine nach einem der vorstehenden Ansprüche, wobei, wenn sich der Griff (10, 12, 10', 12') in der Umwälzposition befindet, die Benutzerschnittstelle (20, 20a, 20b) vom Antriebsabschnitt (12, 12') durch eine Distanz im Bereich von 0 bis 10 cm, insbesondere im Bereich von 0,5 bis 7 cm, wie z. B. 1 bis 5 cm, optional 1,5 bis 3 cm, beabstandet ist.

17. Maschine nach einem der vorstehenden Ansprüche, die einen Durchgang (7) zum Einbringen des aromatisierenden Inhaltsstoffs durch Schwerkraft in das Getränkezubereitungsmodul (12, 12') aufweist, der allgemein über und/oder neben dem Durchgang angeordnet ist, wenn sich der Griff (10, 12, 10', 12') in der Übergabeposition befindet.

## Revendications

1. Machine (1) de préparation d'une boisson ayant :
- une partie supérieure (2a) ;
- une face avant (2b) comportant une sortie (4, 4a, 4b, 4c) pour distribuer ladite boisson
- un module de préparation de boisson (1') pour contenir un ingrédient aromatisant, en particulier un ingrédient pré-portionné tel qu'un ingrédient fourni à un tel module à l'intérieur d'une capsule et pour faire circuler un liquide à travers celui-ci pour former ladite boisson ;
- une poignée (10, 12, 10', 12') mobile de façon pivotante par-dessus la partie supérieure (2a) entre une position de transfert pour le chargement dudit ingrédient dans le module et/ou l'évacuation dudit ingrédient du module et une position de circulation pour faire circuler ledit liquide à travers ledit ingrédient ; et
- une interface utilisateur (20, 20a, 20b) pour amorcer la circulation dudit liquide à travers ledit ingrédient dans le module de préparation de boisson,
la poignée possédant une partie d'entraînement (12, 12') agencée pour être mise en contact et entraînée par une main humaine (50) pour déplacer la poignée entre la position de transfert et la position de circulation,
dans laquelle l'interface utilisateur (20, 20a, 20b) est située sur la face avant (2b) et dans laquelle la poignée (10, 12, 10', 12') et l'interface utilisateur (20, 20a, 20b) sont agencées de sorte que ladite interface utilisateur soit utilisable par ladite main humaine (50) tandis que ladite main est toujours en contact avec la partie d'entraînement (12, 12') de la poignée lors de l'entraînement de la poignée dans la position de circulation,
dans laquelle la poignée (10', 12') a une paire de leviers (10') et la partie d'entraînement (12') entre eux, la paire de leviers ayant des premières parties d'extrémités (13') qui sont montées de façon pivotante et des secondes parties d'extrémité qui sont jointes par l'intermédiaire de la partie d'entraînement (12'),
dans laquelle la partie d'entraînement (12') forme une partie de moindre force antagoniste de la poignée (10', 12') à l'encontre de ladite main humaine (50) pendant l'entraînement de la poignée,
dans laquelle la poignée (10', 12') est généralement en forme de « U » et
dans laquelle la partie d'entraînement (12') forme une partie centrale de la poignée généralement en forme de « U ».

2. Machine (1) de préparation d'une boisson ayant :
- une partie supérieure (2a) ;
- une face avant (2b) comportant une sortie (4, 4a, 4b, 4c) pour distribuer ladite boisson
- un module de préparation de boisson (1') pour contenir un ingrédient aromatisant, en particulier un ingrédient pré-portionné tel qu'un ingrédient fourni à un tel module à l'intérieur d'une capsule et pour faire circuler un liquide à travers celui-ci pour former ladite boisson ;
- une poignée (10, 12, 10', 12') mobile de façon pivotante par-dessus la partie supérieure (2a) entre une position de transfert pour le chargement dudit ingrédient dans le module et/ou l'évacuation dudit ingrédient du module et une position de circulation pour faire circuler ledit liquide à travers ledit ingrédient ; et
- une interface utilisateur (20, 20a, 20b) pour amorcer la circulation dudit liquide à travers ledit ingrédient dans le module de préparation de boisson,
la poignée possédant une partie d'entraînement (12, 12') agencée pour être mise en contact et entraînée par une main humaine (50) pour déplacer la poignée entre la position de transfert et la position de circulation,
dans laquelle l'interface utilisateur (20, 20a, 20b) est située sur la face avant (2b) et dans laquelle la poignée (10, 12, 10', 12') et l'interface utilisateur (20, 20a, 20b) sont agencées de sorte que ladite interface utilisateur soit utilisable par ladite main humaine (50) tandis que ladite main est toujours en contact avec la partie d'entraînement (12, 12') de la poignée lors de l'entraînement de la poignée dans la position de circulation,
***caractérisée en ce que***
l'interface utilisateur (20a, 20b) s'étend au-dessus de la partie d'entraînement (12') lorsque la poignée (10', 12') est dans la position de circulation.

3. Machine selon la revendication 1 ou 2, dans laquelle la partie d'entraînement (12, 12') de la poignée (10, 12, 10', 12') est agencée pour être poussée et/ou tirée par ladite main humaine (50) pour entraîner la poignée, l'interface utilisateur (20, 20a, 20b) étant utilisable par ladite main humaine tandis que ladite main est toujours dans une position de poussée et/ou de traction vis-à-vis de la partie d'entraînement lors d'un entraînement de la poignée dans la position de circulation.

4. Machine selon la revendication 1, 2 ou 3, dans laquelle la partie d'entraînement (12') de la poignée (10, 12, 10', 12') est agencée pour être saisie par ladite main humaine (50) pour entraîner la poignée, l'interface utilisateur (20a, 20b) étant utilisable par ladite main humaine tandis que ladite main continue de saisir la partie d'entraînement (12') lors d'un entraînement de la poignée dans la position de circulation.

5. Machine selon une quelconque revendication précédente lorsqu'elle dépend de la revendication 2, dans laquelle la partie d'entraînement (12, 12') forme une partie de moindre force antagoniste de la poignée (10, 12, 10', 12') à l'encontre de ladite main humaine (50) lors de l'entraînement de la poignée.

6. Machine selon une quelconque revendication précédente, dans laquelle l'interface utilisateur (20, 20a, 20b) inclut au moins un sélecteur utilisateur choisi parmi des boutons poussoirs, des boutons à tourner, des commutateurs à bascule, des boutons coulissants, des boutons tactiles, des pavés tactiles et des écrans tactiles.

7. Machine selon la revendication 6, dans laquelle l'interface utilisateur (20, 20a, 20b) comprend une pluralité de sélecteurs pour sélectionner différentes boissons, en particulier des boissons de tailles différentes et/ou de types différents.

8. Machine selon une quelconque revendication précédente lorsqu'elle dépend de la revendication 2, dans laquelle la poignée (10', 12') est généralement en forme de « U ».

9. Machine selon la revendication 8, dans laquelle la partie d'entraînement (12') forme une partie centrale de la poignée généralement en forme de « U ».

10. Machine selon la revendication 2 ou selon l'une quelconque des revendications 3 à 9 lorsqu'elle dépend de la revendication 2, dans laquelle la poignée (10', 12') a une paire de leviers (10') et la partie d'entraînement (12') entre eux, en particulier une paire de leviers ayant des premières parties d'extrémités (13') qui sont montées de façon pivotante et des secondes parties d'extrémité qui sont jointes par l'intermédiaire de la partie d'entraînement (12').

11. Machine selon la revendication 2 ou selon l'une quelconque des revendications 3 à 7 lorsqu'elle dépend de la revendication 2, dans laquelle la poignée (10, 12) est un levier à bras unique.

12. Machine selon la revendication 11, dans laquelle le levier a une première partie d'extrémité (13) qui est montée de façon pivotante et une autre partie d'extrémité qui forme ladite partie d'entraînement (12).

13. Machine selon une quelconque revendication précédente, dans laquelle l'interface utilisateur (20, 20b) s'étend en dessous de la partie d'entraînement lorsque la poignée (10, 12, 10', 12') est dans la position de circulation, l'interface utilisateur (20) étant éventuellement située à l'avant de la poignée (10, 12).

14. Machine selon la revendication 1 ou selon l'une quelconque des revendications 1 à 9 ou 13 lorsqu'elle dépend de la revendication 1, dans laquelle l'interface utilisateur (20a, 20b) s'étend au-dessus et/ou derrière la partie d'entraînement (12') lorsque la poignée (10', 12') est dans la position de circulation.

15. Machine selon la revendication 2 ou selon l'une quelconque des revendications 3 à 13 lorsqu'elle dépend de la revendication 2, dans laquelle l'interface utilisateur (20a, 20b) s'étend derrière la partie d'entraînement (12') lorsque la poignée (10', 12') est dans la position de circulation.

16. Machine selon une quelconque revendication précédente, dans laquelle, lorsque la poignée (10, 12, 10', 12') est dans la position de circulation, l'interface utilisateur (20, 20a, 20b) est espacée de la partie d'entraînement (12, 12') d'une distance dans la plage de 0 à 10 cm, en particulier dans la plage de 0,5 à 7 cm, telle que 1 à 5 cm, éventuellement 1,5 à 3 cm.

17. Machine selon une quelconque revendication précédente, qui a un passage (7) pour l'introduction par gravité dudit ingrédient aromatisant dans le module de préparation de boisson, la partie d'entraînement (12, 12') étant située généralement au-dessus du, et/ou adjacente au, passage lorsque la poignée (10, 12, 10', 12') est dans la position de transfert.
